# EUROPÄISCHE PATENTANMELDUNG

(11) **EP 4 844 175 A1**
(43) Veröffentlichungstag der Anmeldung: **25.11.2026**
(21) Anmeldenummer: 26168442.7
(22) Anmeldetag: 27.03.2026
(51) Int. Cl.: E05F 15/63, F16D 41/08, F16D 43/26

(54) **ANTRIEBSEINHEIT FÜR EINE ANTRIEBSVORRICHTUNG ZUM BEWEGEN EINES BEWEGBAREN MÖBELTEILS**

(30) Priorität: 20.05.2025 DE 102025119657
(71) Anmelder: FLAP Competence Center kft, 1184 Budapest (HU)
(72) Erfinder: BENDEFY, András Gábor, 2083 Solymár (HU)
(74) Vertreter: Neumann Müller Oberwalleney Patentanwälte PartG mbB

(57) **Zusammenfassung**

Die Erfindung betrifft eine Antriebseinheit für eine Antriebsvorrichtung zum Bewegen eines bewegbaren Möbelteils, umfassend:
- eine von einem Elektromotor 2 angetriebene Antriebswelle 3,
- eine Abtriebswelle 4 zum Bewegen einer Verstelleinheit 5 der Antriebsvorrichtung 25,
- eine Kupplung 6, über die die Antriebswelle 3 mit der Abtriebswelle 4 antriebsverbindbar ist,
- mit einem Eingangskupplungselement 7, das mit der Antriebswelle 3 verbunden ist,
- mit einem Ausgangskupplungselement 8, das mit der Abtriebswelle 4 verbunden ist, und
- mit einem Mitnehmer 9, an dem zumindest ein Klemmkörper 10 geführt ist,
- wobei der zumindest eine Klemmkörper 10 mittels des Mitnehmers 9 zwischen zumindest einer das Eingangskupplungselement 7 und das Ausgangskupplungselement 8 antriebsverbindenden Koppelstellung und einer das Eingangskupplungselement 7 und das Ausgangskupplungselement 8 entkoppelnden Freilaufstellung schaltbar ist, wobei

- ein Getriebe 11, über das der Mitnehmer 9 mit einer geringeren Drehzahl als das Eingangskupplungselement 7 in derselben Drehrichtung angetrieben ist.

Ferner betrifft die Erfindung eine Antriebsvorrichtung und ein Möbel.

## Beschreibung

Die Erfindung betrifft eine Antriebseinheit für eine Antriebsvorrichtung zum Bewegen eines bewegbaren Möbelteils. Ferner betrifft die Erfindung eine Antriebsvorrichtung und ein Möbel.

Antriebseinheiten der eingangs genannten Art werden beispielsweise dazu eingesetzt, eine Antriebsvorrichtung zum Bewegen eines bewegbaren Möbelteils, insbesondere Klappen, Faltklappen, Türen oder dergleichen, zwischen einer Schließstellung und einer Offenstellung anzutreiben.

Aus der EP 2 086 372 A1 ist zum Beispiel ein Möbel mit einer Antriebsvorrichtung für bewegbare Möbelteile mit einer elektrischen Antriebseinheit und einer Kupplungsvorrichtung zur zumindest zeitweiligen Übertragung der Kraft der elektrischen Antriebseinheit auf das bewegbare Möbelteil bekannt. Die Kupplungsvorrichtung weist einen Antrieb und einen Abtrieb auf. Zwischen dem Antrieb und dem Abtrieb sind Kupplungselemente wirksam, durch die in einer ersten Betriebsstellung eine Klemmverbindung zwischen Antrieb und Abtrieb und damit eine Kupplung derselben herstellbar ist und die in einer zweiten Betriebsstellung durch Federmittel in eine Lage bewegbar sind, in der der Antrieb und der Abtrieb nicht kuppeln. Die Kupplungselemente greifen ständig in rechteckförmige Aussparungen eines Käfigs ein. Um ein definiertes Einkuppelverhalten der Kupplungsvorrichtung zu erreichen, ist eine Welle des Käfigs immer leicht durch eine externe Vorrichtung gebremst. Die Antriebsvorrichtung weist jedoch den Nachteil auf, dass ein präzises Ansteuern der zweiten Betriebsstellung nur eingeschränkt möglich ist.

Aus der DE 42 17 744 A1 ist eine Vorrichtung zum Übertragen von Drehbewegungen bekannt. Die DE 38 30 283 A1 zeigt eine Kupplung zur Verwendung bei einer Hilfskraftkupplung.

Der vorliegenden Erfindung liegt daher die Aufgabe zugrunde, eine kompakte Antriebseinheit für einen Möbelbeschlag bereitzustellen, die ein zuverlässiges und präzises Entkoppeln der Antriebswelle von der Abtriebswelle ermöglichen

Die Aufgabe wird gelöst durch eine Antriebseinheit mit einer von einem Elektromotor angetriebenen Antriebswelle, einer Abtriebswelle zum Bewegen einer Verstelleinheit der Antriebsvorrichtung und einer Kupplung, über die die Antriebswelle mit der Abtriebswelle antriebsverbindbar ist. Die Kupplung weist erfindungsgemäß ein mit der Antriebswelle verbundenes Eingangskupplungselement und ein mit der Abtriebswelle verbundenes Ausgangskupplungselement auf. Weiter weist die Kupplung einen Mitnehmer auf, an dem zumindest ein Klemmkörper geführt ist. Der zumindest eine Klemmkörper ist erfindungsgemäß mittels des Mitnehmers zwischen zumindest einer das Eingangskupplungselement und das Ausgangskupplungselement antriebsverbindenden Koppelstellung und einer das Eingangskupplungselement und das Ausgangskupplungselement entkoppelnden Freilaufstellung schaltbar. Erfindungsgemäß weist die Antriebseinheit ein Getriebe auf, über das der Mitnehmer mit einer geringeren Drehzahl als das Eingangskupplungselement in derselben Drehrichtung angetrieben ist.

Indem der Mitnehmer durch das Getriebe angetrieben ist, kann der zumindest eine Klemmkörper zuverlässig mittels des Mitnehmers zwischen der Koppelstellung und der Freilaufstellung geschaltet werden. Dadurch, dass der Mitnehmer mit einer geringeren Drehzahl als das Eingangskupplungselement angetrieben ist, kann der Mitnehmer präzise gegenüber dem Eingangskupplungselement ausgerichtet werden, um den zumindest einen Klemmkörper störungssicher in die Freilaufstellung zu schalten. Die geringere Drehzahl des Mitnehmers im Vergleich zu der Drehzahl des Eingangskupplungselements ermöglicht ein ruhiges und gleichmäßiges Schalten zwischen der Koppelstellung und der Freilaufstellung. Durch die Differenz der Drehzahl des Mitnehmers und der Drehzahl des Eingangskupplungselements kann durch ein Bremsen des Mitnehmers und hierfür erforderliche externe Vorrichtungen verzichtet werden.

Die Antriebseinheit bezeichnet eine Einheit oder Baugruppe aus mehreren Elementen oder Bauteilen, die dazu ausgebildet ist, die Verstelleinheit einer Antriebsvorrichtung zu bewegen. Die Antriebswelle ist von dem Elektromotor angetrieben. Die Antriebswelle kann mittelbar oder unmittelbar mit dem Elektromotor verbunden sein. Insbesondere kann die Antriebswelle über ein zusätzliches Antriebselement, beispielsweise eine mit dem Elektromotor verbundene Schneckenwelle, angetrieben sein. Die Antriebswelle ist über die Kupplung mit der Abtriebswelle antriebsverbindbar, d.h., dass das Drehmoment der Antriebswelle mittels der Kupplung auf die Abtriebswelle übertragbar ist. Die Abtriebswelle kann unmittelbar mit der Verstelleinheit der Antriebsvorrichtung verbunden sein. Alternativ kann die Abtriebswelle über eine Überlastkupplung mit der Verstelleinheit verbunden sein.

Die Kupplung ist dazu ausgebildet, die Antriebswelle mit der Abtriebswelle zum Übertragen des Drehmoments durch eine Verbindung zwischen dem Eingangskupplungselement und dem Ausgangskupplungselement miteinander zu verbinden. Insbesondere kann die Kupplung derart ausgebildet sein, dass das Eingangskupplungselement und das Ausgangskupplungselement in Abhängigkeit von der Drehrichtung und/oder der Drehzahl der Antriebswelle gekoppelt oder entkoppelt sind. Das Eingangskupplungselement ist mit der Antriebswelle verbunden und das Ausgangskopplungselement ist mit der Abtriebswelle verbunden. Unter verbunden kann in diesem Zusammenhang verstanden werden, dass das jeweilige Element und die jeweilige Welle einstückig ausgebildet oder mittels eines zusätzlichen Verbindungsmittels miteinander verbunden sind.

Das Eingangskupplungselement und das Ausgangskupplungselement sind mittels des zumindest einen Klemmkörpers miteinander koppelbar. Der Klemmkörper ist an dem Mitnehmer geführt und durch diesen zwischen der Koppelstellung und der Freilaufstellung schaltbar. Weiter kann der Klemmkörper ein zylindrisches Bauteil bezeichnen. Beispielsweise kann der Klemmkörper als Zylinderstift ausgebildet sein. Der Klemmkörper kann an dem Mitnehmer in radialer Richtung zu der Drehachse zwischen dem Eingangskupplungselement und dem Ausgangskupplungselement angeordnet sein. In der Koppelstellung ist der Klemmkörper derart an dem Mitnehmer angeordnet, dass das Eingangskupplungselement und das Ausgangskupplungselement antriebsverbindend miteinander gekoppelt sind. In diesem Zusammenhang kann unter antriebsverbindend verstanden werden, dass das Drehmoment der Antriebswelle in der Koppelstellung von dem Eingangskupplungselement auf das Ausgangskupplungselement und die Abtriebswelle übertragen wird. Der Klemmkörper kann in der Koppelstellung zwischen dem Eingangskupplungselement und dem Ausgangskupplungselement eingeklemmt sein. In der Freilaufstellung ist der Klemmkörper derart an dem Mitnehmer angeordnet, dass die Antriebswelle mit dem Eingangskupplungselement unabhängig von der Abtriebswelle mit dem Ausgangskupplungselement um eine Drehachse dreht. Mit anderen Worten wird in der Freilaufstellung des Klemmkörpers das Drehmoment der Antriebswelle nicht auf die Abtriebswelle übertragen. Der Klemmkörper kann als Rolle ausgebildet sein.

Der Mitnehmer ist über das Getriebe mit einer im Vergleich zu der Drehzahl des Eingangskupplungselements geringeren Drehzahl in dieselbe Drehrichtung, insbesondere um die Drehachse, angetrieben. Dieselbe Drehrichtung bezeichnet die Drehrichtung des Eingangskupplungselements Der Mitnehmer kann auf der Antriebswelle drehbar gelagert sein. Weiter kann der Mitnehmer dazu ausgebildet sein, zumindest einen Klemmkörper oder mehrere Klemmkörper aufzunehmen. Das Getriebe kann ein oder mehrere Elemente aufweisen.

Zum Bewegen der Verstelleinheit der Antriebsvorrichtung kann die Antriebswelle in eine erste Drehrichtung oder eine zweite Drehrichtung gedreht werden. Bei einem in der Koppelstellung angeordneten Klemmkörper wird das Drehmoment der Antriebswelle auf die Abtriebswelle übertragen, wodurch die Verstelleinheit in Abhängigkeit von der Drehrichtung derart bewegt wird, dass das bewegbare Möbelteil in Richtung einer Offenstellung oder einer Schließstellung verstellt wird. Der Klemmkörper kann bei Erreichen der Schließstellung oder der Offenstellung des Möbelteils von der Koppelstellung in die Freilaufstellung geschaltet werden, um ein manuelles Bewegen des Möbelteils durch einen Nutzer zu ermöglichen. Das Verstellen des Klemmkörpers kann durch eine Drehrichtungsumkehr der Antriebswelle, beziehungsweise des Elektromotors bewirkt werden. Durch das Getriebe wird der Mitnehmer langsamer als das Eingangskupplungselement gedreht, sodass der Mitnehmer relativ zu dem Eingangskupplungselement verstellt wird und den Klemmkörper von der Koppelstellung in die Freilaufstellung schaltet. Das Getriebe zum Antreiben des Mitnehmers kann über die Antriebswelle mittels des Elektromotors oder ein weiteres Antriebsaggregat angetrieben werden.

Die Antriebswelle, die Abtriebswelle, das Eingangskupplungselement, das Ausgangskupplungselement und/oder das Zahnrad des Getriebes können koaxial zu einer Drehachse der Antriebswelle angeordnet sein, um eine noch kompaktere Bauweise für die Antriebseinheit und/oder die Antriebsvorrichtung zu ermöglichen.

Nach einer möglichen Ausgestaltung kann der Mitnehmer über das Getriebe mittels der Antriebswelle antreibbar sein. Das Getriebe kann derart ausgebildet sein, dass eine Übersetzung zwischen der Antriebswelle und dem Mitnehmer von größer als eins vorliegt. Das Getriebe kann dazu ausgebildet sein, dass Drehmoment von der Antriebswelle zumindest in der Freilaufstellung auf den Mitnehmer zu übertragen. Indem der Mitnehmer über das Getriebe mittels der Antriebswelle antreibbar ist, kann der Mitnehmer mittels des Elektromotors angetrieben werden, wodurch auf ein zusätzliches Antriebsaggregat verzichtet werden kann. Hierdurch weist die Antriebseinheit eine noch kompaktere Bauweise auf und das Verstellen des Mitnehmers kann mittels des Elektromotors gesteuert werden.

Gemäß einer möglichen Weiterbildung kann das Getriebe ein mit der Antriebswelle verbundenes Zahnrad und ein Übertragungszahnrad zum Übertragen des Drehmoments von der Antriebswelle auf den Mitnehmer aufweisen. Das Zahnrad kann auf der Antriebswelle angeordnet sein. Beispielsweise kann das Zahnrad reibschlüssig mit der Antriebswelle verbunden sein, um das Drehmoment der Antriebswelle auf das Zahnrad zu übertragen.

Das Übertragungszahnrad kann neben der Antriebswelle und/oder dem Mitnehmer angeordnet sein. Insbesondere kann das Übertragungszahnrad um eine Rotationsachse drehbar gelagert sein. Beispielsweise ist das Übertragungszahnrad an einem Gehäuse der Antriebseinheit und/oder der Antriebsvorrichtung gelagert. Die Rotationsachse kann parallel zu der Drehachse angeordnet sein.

Das Übertragungszahnrad kann eine mit dem Zahnrad in Eingriff befindliche erste Verzahnung und eine mit einer Außenverzahnung des Mitnehmers in Eingriff befindliche zweite Verzahnung aufweisen. Die beiden Verzahnungen des Übertragungszahnrads können durch einen Trennabschnitt in Richtung entlang der Rotationsachse voneinander getrennt sein. Der Trennabschnitt kann beispielsweise als ein in radialer Richtung zu der Rotationsachse vorstehender Ringabschnitt ausgebildet sein. Die beiden Verzahnungen können jeweils an einem Endabschnitt des Übertragungszahnrades ausgebildet sein. Ein Endabschnitt kann sich von dem Trennabschnitt bis zu einer Stirnfläche des Übertragungszahnrads erstrecken. Unter der Stirnfläche kann ein abschließender Querschnitt des Übertragungszahnrads quer zu der Rotationsachse verstanden werden.

Das Zahnrad und die zweite Verzahnung können eine Zähnezahl mit einem Wert zwischen 10 und 20 oder 12 und 16 aufweisen. Die erste Verzahnung des Übertragungszahnrads und die Außenverzahnung des Mitnehmers können eine Zähnezahl mit einem Wert zwischen 10 und 12 oder 12 und 16 aufweisen. Beispielsweise können das Zahnrad und die zweite Verzahnung des Übertragungszahnrads jeweils eine Zähnezahl mit einem Wert von 14 aufweisen. Die erste Verzahnung des Übertragungszahnrads und die Außenverzahnung des Mitnehmers können zum Beispiel eine Zähnezahl mit einem Wert von 15 aufweisen. Durch die mögliche Ausgestaltung des Getriebes, insbesondere des Zahnrads, des Übertragungszahnrads und des Mitnehmers kann auf einfache und zuverlässige Weise gewährleistet werden, dass der Mitnehmer über das Getriebe mittels der Antriebswelle antreibbar ist. Das vorteilhafte Übersetzungsverhältnis des Getriebes ermöglicht auf einfache Weise das Antreiben des Mitnehmers mit der im Vergleich zu der Drehzahl des Eingangskupplungselements geringeren Drehzahl.

Gemäß einer möglichen Ausgestaltung kann das Eingangskupplungselement derart ausgebildet sein, dass der Klemmkörper bei einer Drehrichtungsumkehr der Antriebswelle zwischen der Koppelstellung und der Freilaufstellung verstellt wird, um ein besonders präzises und wartungsarmes Schalten der Kupplung zu ermöglichen. Die Kupplung kann derart ausgebildet sein, dass der Klemmkörper nur mechanisch zwischen der Koppelstellung und der Freilaufstellung verstellt wird. Beispielsweise kann der Klemmkörper durch die Geometrie des quer zur Drehachse angeordneten Querschnitts des Eingangskupplungselements zwischen der Koppelstellung und der Freilaufstellung verstellbar sein.

Insbesondere kann das Eingangskupplungselement derart ausgebildet sein, dass die Antriebswelle relativ zu dem Mitnehmer zum Verstellen des Klemmkörpers von der Koppelstellung in die Freilaufstellung bei der Drehrichtungsumkehr der Antriebswelle mit einem Drehwinkel mit einem Wert zwischen 15 und 30° in die entgegengesetzte Drehrichtung gedreht wird. Unter entgegengesetzt kann verstanden werden, dass die Antriebswelle und der Mitnehmer entgegen der vorherigen Drehrichtung, beispielsweise gegen den Uhrzeigersinn anstatt im Uhrzeigersinn um die Drehachse gedreht werden. Nach der Drehrichtungsumkehr kann der Mitnehmer weiterhin in dieselbe Drehrichtung wie die Antriebswelle gedreht werden. Unter dem Drehwinkel kann die Drehung einer die Drehachse und eine Mantelfläche des Eingangskupplungselements schneidenden Radialachse um die Drehachse verstanden werden. Die Mantelfläche des Eingangskupplungselements kann sich in Richtung der Drehachse erstrecken. Der Drehwinkel mit einem Wert zwischen 15° und 30 ° kann neben der Ausgestaltung des Eingangskupplungselements alternativ oder zusätzlich durch die Auslegung des Getriebes und die dadurch resultierende Drehzahldifferenz zwischen dem Mitnehmer und dem Eingangskupplungselement eingestellt werden. Durch einen Drehwinkel mit einem Wert zwischen 15° und 30 ° kann die Kupplung bei einer Vielzahl unterschiedlicher Elektromotoren zuverlässig verwendet werden. So können auch Elektromotoren eingesetzt werden, bei denen eine genaue Ansteuerung eines Drehwinkels von weniger als 10 ° nicht oder nur schwer möglich ist, wodurch die Antriebseinheit flexibler und in Ihrer Herstellung kostengünstiger ist.

Die Kupplung kann derart ausgebildet sein, dass der Klemmkörper in beide Drehrichtungen der Antriebswelle von der Koppelstellung in die Freilaufstellung verstellbar ist. Insbesondere kann das Eingangskupplungselement im Wesentlichen als Dreiecksprofil ausgebildet sein. Das Dreiecksprofil kann ein Längenabschnitt der Antriebswelle sein und quer zu der Drehachse einen im Wesentlichen dreieckigen Querschnitt aufweisen. Vorzugsweise kann das Dreiecksprofil einen gleichseitigen, dreieckigen Querschnitt quer zu der Drehachse aufweisen. Unter im Wesentlichen kann verstanden werden, dass die Ecken des Dreieckprofils, beziehungsweise des Querschnitts des Dreieckprofils abgerundet sein können, um ein Drehen des Dreieckprofils in dem Hohlraum des Mitnehmers zu verbessern.

Die Kupplung kann drei in Umfangsrichtung zu der Drehachse verteilt angeordnete Klemmkörper aufweisen. Die Klemmkörper können jeweils einer Seitenfläche des Dreiecksprofils zugeordnet sein und entlang der jeweiligen Seitenfläche zwischen der Koppelstellung und der Freigabestellung verstellbar sein. In der Freilaufstellung kann eine Längsachse eines Klemmkörpers eine Seitenhalbierende des Dreiecksprofils schneiden. In der Koppelstellung kann der Klemmkörper an einer Eckrundung des Dreiecksprofils und der Innenwand des Ausgangskopplungselements anliegen.

Die vorteilhafte Ausgestaltung des Eingangskupplungselements ermöglicht ein einfaches und zuverlässiges mechanisches Schalten des Klemmkörpers zwischen der Koppelstellung und der Freilaufstellung. Durch das Dreiecksprofil ist zudem ein Verstellen zwischen den Stellungen unabhängig von der Drehrichtung der Antriebswelle möglich, sodass der Klemmkörper in der Offenstellung oder der Schließstellung des bewegbaren Möbelteils nach der Öffnungsbewegung oder nach der Schließbewegung durch die Drehrichtungsumkehr von der Koppelstellung in die Freilaufstellung verstellbar ist.

Nach einer möglichen Weiterbildung kann das Ausgangskupplungselement eine Aufnahme zum zumindest teilweisen Aufnehmen des Mitnehmers aufweisen, wobei der Klemmkörper in der Koppelstellung mit einer Innenwand der Aufnahme in Anlage ist. Das Ausgangskupplungselement kann an dem Gehäuse der Antriebseinheit und/oder der Antriebsvorrichtung gelagert sein. Beispielsweise kann hierzu ein Lagerelement, insbesondere ein Wälzlager, vorgesehen sein. Die Aufnahme des Ausgangskupplungselements kann zylinderförmig ausgebildet sein. Insbesondere kann die Aufnahme quer zu der Drehachse einen kreisförmigen Querschnitt aufweisen. Beispielsweise kann die Aufnahme einen Innenraum des Ausgangskupplungselements definieren. Der Mitnehmer kann zumindest abschnittsweise in dem Innenraum aufgenommen sein.

Ferner kann der Mitnehmer hülsenförmig ausgebildet sein und einen sich in Richtung entlang der Drehachse erstreckenden Hohlraum aufweisen. Der Hohlraum des Mitnehmers kann quer zu der Drehachse einen kreisförmigen Querschnitt aufweisen.

Weiter kann der Hohlraum zwei Teilabschnitte aufweisen. Die Teilabschnitte können unterschiedliche Durchmesser aufweisen. Beispielsweise kann ein erster Teilabschnitt zum Lagern des Mitnehmers auf der Antriebswelle einen kleineren Durchmesser als ein zweiter Teilabschnitt zum Aufnehmen des Eingangskopplungselements aufweisen. Das Eingangskupplungselement kann insbesondere in Form des Dreiecksprofils einstückig mit der Antriebswelle verbunden sein, wobei das Dreiecksprofil durch einen Freischnitt von der übrigen Antriebswelle getrennt sein kann.

Der Klemmkörper kann in einem Fenster des Mitnehmers sitzen. Der Mitnehmer kann mehrere jeweils einem Klemmkörper zugeordnete Fenster aufweisen. Der Klemmkörper kann in der Koppelstellung zwischen der Innenwand der Aufnahme und einer Außenfläche der Antriebswelle klemmen. Die Mantelfläche des Dreiecksprofil kann ein Abschnitt der Außenfläche der Antriebwelle sein. In der Koppelstellung können der oder die Klemmkörper durch das Eingangskupplungselement mit der Innenwand des Ausgangskopplungselements in Anlage und gegen diese gepresst sein, sodass ein Form- und/oder Kraftschluss zwischen dem Eingangskupplungselement und dem Ausgangskupplungselement erzeugt ist. Die mögliche Ausgestaltung des Ausgangskupplungselements und/oder des Mitnehmers ermöglicht eine besonders kompakte Bauweise für die Antriebseinheit, wodurch insbesondere eine Antriebsvorrichtung mit geringer Dicke ermöglicht wird. Ferner kann durch das radiale Verpressen des Klemmkörpers zwischen dem Eingangskopplungselement und dem Ausgangskopplungselement ein zuverlässiger und stabiler Form- und/oder Kraftschluss in Umfangsrichtung zu der Drehachse erzeugt werden.

Gemäß einer möglichen Ausgestaltung kann das Zahnrad des Getriebes reibschlüssig mit der Antriebswelle verbunden sein. Insbesondere kann das Zahnrad des Getriebes derart reibschlüssig mit der Antriebswelle verbunden sein, dass das Zahnrad in der Koppelstellung des Klemmkörpers auf der angetriebenen Antriebswelle schleift. Insbesondere kann die Antriebswelle eine Nut zum Aufnehmen eines Reibelements, beispielsweise eines O-Rings, aufweisen. Das Reibelement kann auf der Antriebswelle angeordnet sein. Weiter kann das Reibelement derart ausgebildet sein, dass das Zahnrad in der Koppelstellung auf der angetriebenen Antriebswelle schleift. In diesem Zusammenhang kann unter Schleifen verstanden werden, dass das Zahnrad auf dem Reibelement schleift und nicht durch die Antriebswelle angetrieben wird. Insbesondere kann das Zahnrad eine axiale Vertiefung zum Aufnehmen des Reibelements aufweisen. Das Reibelement kann an einer in Umfangsrichtung zu der Drehachse angeordneten Innenfläche der Vertiefung schleifen. In der Freilaufstellung kann zwischen dem Reibelement und der Innenfläche der Vertiefung des Zahnrads aufgrund der Drehzahldifferenz zwischen der Antriebswelle und der Abtriebswelle ein Reibschluss in Umfangsrichtung zu der Drehachse ausgebildet sein. In der Koppelstellung kann der Reibschluss aufgrund der angeglichenen Drehzahl gelöst sein. Dadurch, dass das Zahnrad reibschlüssig mit der Antriebswelle verbunden ist und in der Koppelstellung auf der Antriebswelle schleift, kann einer Selbsthemmung der Abtriebswelle entgegengewirkt werden.

Die Erfindung betrifft weiter eine Antriebsvorrichtung zum Bewegen eines bewegbaren Möbelteils, mit einem Gehäuse, einer mit dem Gehäuse verbundenen Verstelleinheit zum zumindest mittelbaren Bewegen eines verzahnten Stellelements und einer Antriebseinheit mit einer mit der Verstelleinheit verbundenen Ausgangswelle. Das Gehäuse ist mit einem Korpus des Möbels verbindbar. Die Antriebseinheit kann wie zuvor beschrieben ausgebildet sein.

Die Verstelleinheit kann eine mit der Antriebswelle antriebsverbindbare Gewindespindel und eine auf der Gewindespindel verstellbare Spindelmutter aufweisen. Die Antriebsvorrichtung kann eine erste Zahnstange aufweisen, die von der Verstelleinheit entlang einer Bewegungsachse zwischen einer ersten Endposition und einer zweiten Endposition bewegbar ist. Weiter kann die Antriebsvorrichtung eine zweite Zahnstange aufweisen, die fest mit dem Gehäuse verbunden ist. Das verzahnte Stellelement kann mit der ersten und zweiten Zahnstange in Eingriff stehen und mit dem bewegbaren Möbelteil verbindbar sein. Die Spindelmutter kann fest mit der ersten Zahnstange verbunden sein, um die erste Zahnstange entlang der Bewegungsachse zu bewegen.

Die Antriebsvorrichtung kann eine Steuereinheit zum Steuern der Antriebseinheit aufweisen. Die Steuereinheit kann mit mindestens einem Sensorelement zum Erfassen zumindest einer Endposition der Verstelleinheit und/oder der ersten Zahnstange verbunden sein. Die Steuereinheit ist vorzugsweise als programmierbare Einheit, z.B. als Computer oder Arduino ausgebildet. Bevorzugt weist die Antriebseinheit ein Sensorelement zum Erfassen von Sensorsignalen, z.B. der Position der Gewindespindel der Verstelleinheit und/oder der ersten Zahnstange auf. Die Steuereinheit kann derart ausgebildet sein, dass sie in Abhängigkeit von Sensorsignalen ein vorgebbares Programm, z.B. ein Steuerprogramm ausführt. Das vorgebbare Programm kann Einstellungsmöglichkeiten für den Bewegungsablauf der Antriebseinheit und/oder der Antriebsvorrichtung aufweisen.

Die Erfindung betrifft ferner ein Möbel mit einem Korpus, einem relativ zu dem Korpus bewegbaren Möbelteil, einem Stellarm und einer Antriebsvorrichtung. Das Gehäuse ist mit dem Korpus verbunden und das verzahnte Stellelement ist über den Stellarm mit dem bewegbaren Möbelteil verbunden. Die Antriebsvorrichtung kann wie zuvor beschrieben ausgebildet sein. Das Möbel kann beispielsweise ein Oberschrank für die Küche sein. Das bewegbare Möbelteil kann beispielsweise eine Klappe, insbesondere eine Faltklappe mit einem unteren und einem oberen Klappenelement sein. Die Antriebsvorrichtung kann unmittelbar mit dem Stellarm oder mittelbar über einen Möbelbeschlag mit dem Stellarm verbunden sein. Der Möbelbeschlag, insbesondere ein Klappenbeschlag, kann an einem Wandelement des Möbels, zum Beispiel einer Seitenwand verbunden sein. Der Stellarm kann um eine Stellachse zwischen der Schließstellung und der Offenstellung verschwenkbar sein. Das bewegbare Möbelteil kann dazu vorgesehen sein, einen Innenraum des Möbelkorpus in der Schließstellung zu verschließen. In der Offenstellung ist der Stellarm derart angeordnet, dass das bewegbare Möbelteil eine Öffnung des Innenraums freigibt.

Ein Ausführungsbeispiel der Erfindung ist nachstehend mit Bezug auf die Zeichnungen erläutert. In den Zeichnungen zeigen in schematischer Darstellung:
- Figur 1: eine Draufsicht auf eine Antriebsvorrichtung ohne Deckel mit einer erfindungsgemäßen Antriebseinheit,
- Figur 2: eine Draufsicht auf die Antriebsvorrichtung von Figur 1 mit einem Längsschnitt durch die Antriebseinheit,
- Figur 3: eine Draufsicht auf die Antriebseinheit von Figur 2;
- Figur 4: einen Ausschnitt der Antriebsvorrichtung entlang der Linie A-A in Figur 3 mit in einer Koppelstellung angeordneten Klemmkörpern,
- Figur 5: den Ausschnitt der Antriebsvorrichtung von Figur 4 mit den in einer Freilaufstellung angeordneten Klemmkörpern,
- Figur 6: eine perspektivische Ansicht der Antriebsvorrichtung von Figur 1 bis 5 mit einem Deckel,
- Figur 7: eine Seitenansicht auf ein Möbel mit der Antriebsvorrichtung von Figur 1 bis 6 mit einem in einer Schließstellung angeordneten Stellarm und einer in einer ersten Endposition angeordneten Verstelleinheit, und
- Figur 8: eine Seitenansicht auf das Möbel von Figur 7 mit dem in einer Offenstellung angeordneten Stellarm und der in einer zweiten Endposition angeordneten Verstelleinheit.

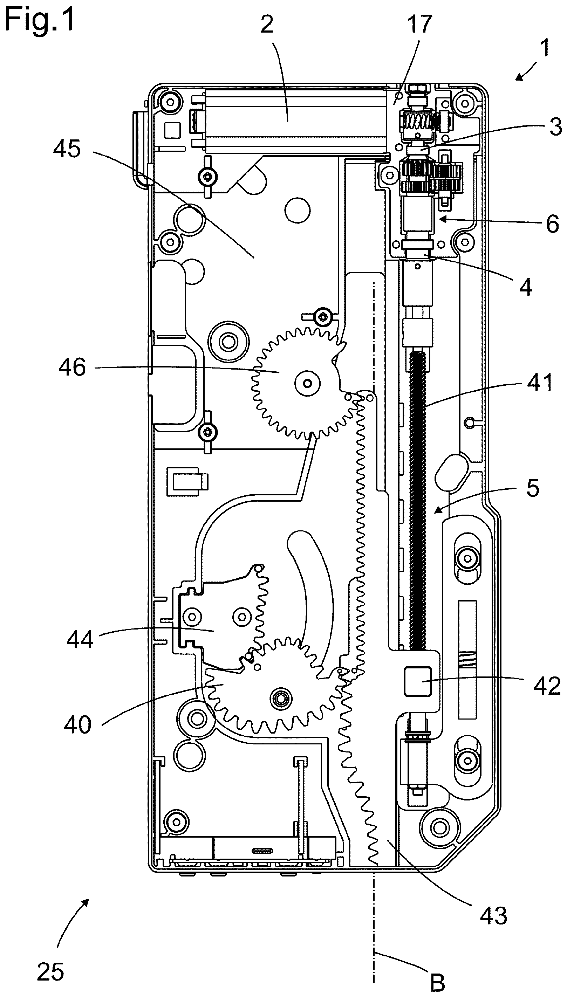

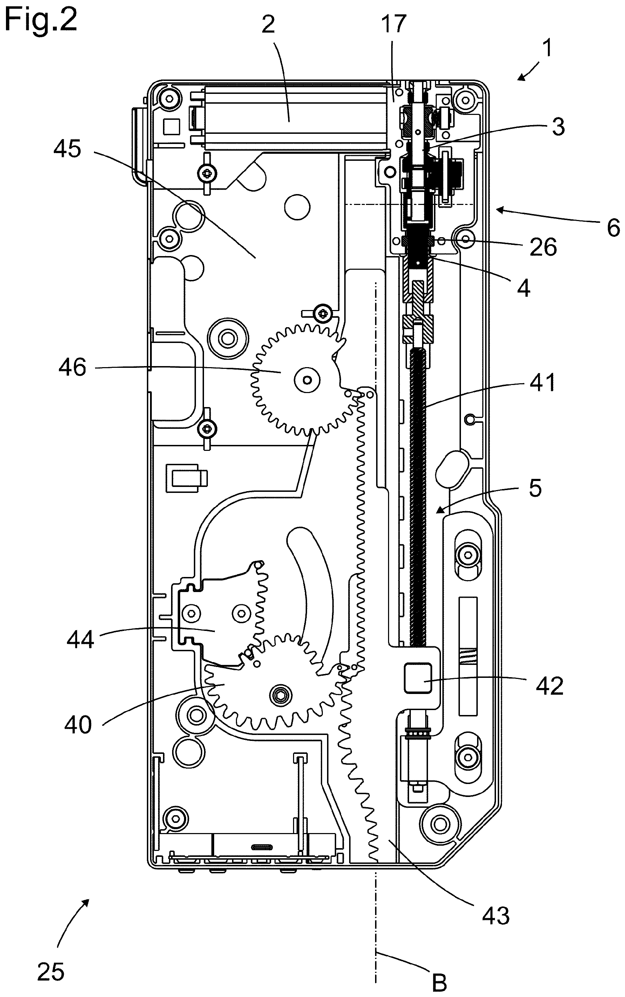

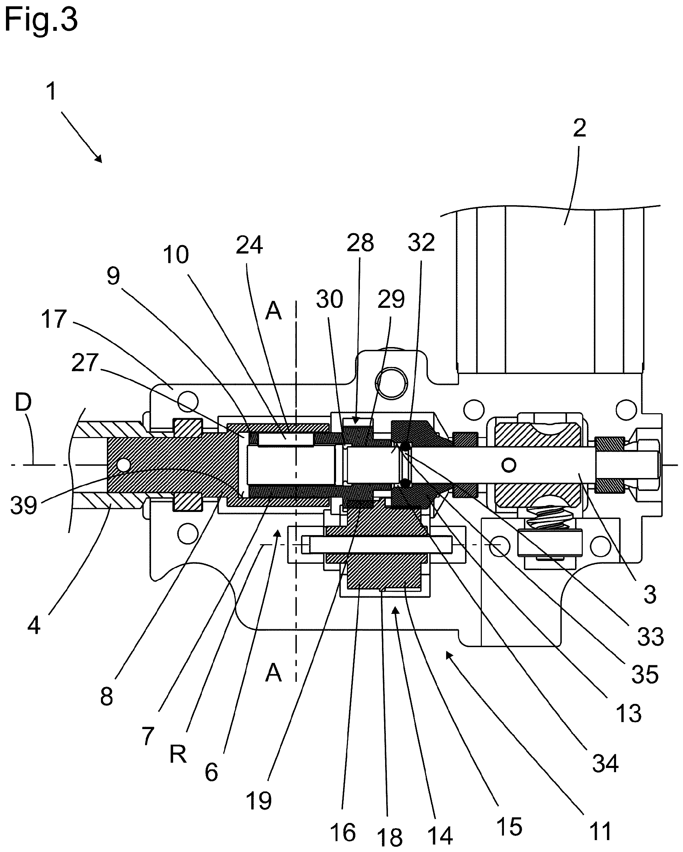

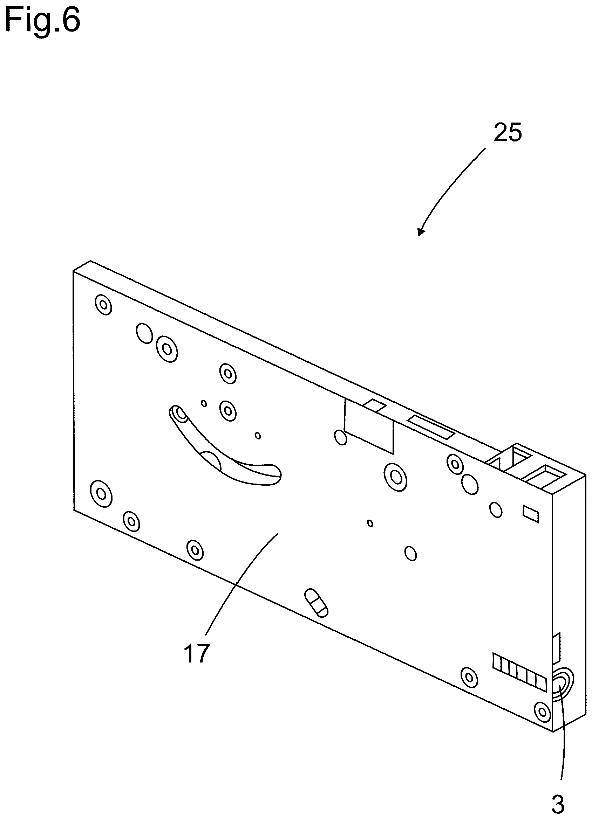

In Figur 1 bis 6, die nachstehend gemeinsam beschrieben werden, ist eine Antriebseinheit 1 einer Antriebsvorrichtung 25, mit einem Elektromotor 2 und einer von dem Elektromotor 2 angetriebenen Antriebswelle 3 gezeigt. Die Antriebseinheit 1 weist eine Abtriebswelle 4 zum Bewegen einer Verstelleinheit 5 der Antriebsvorrichtung 25 auf. Die Antriebswelle 3 und die Abtriebswelle 4 sind über eine Kupplung 6 miteinander antriebsverbindbar.

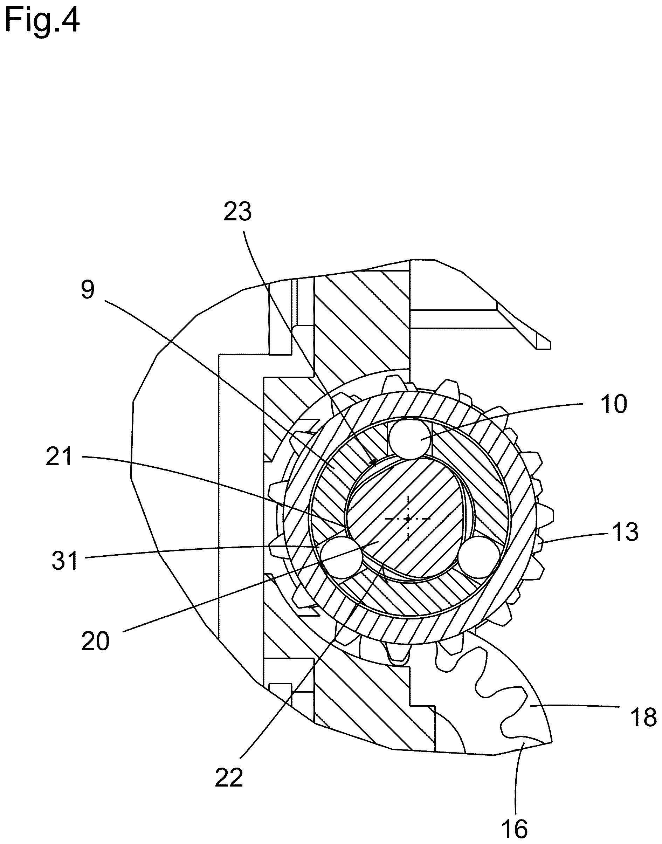

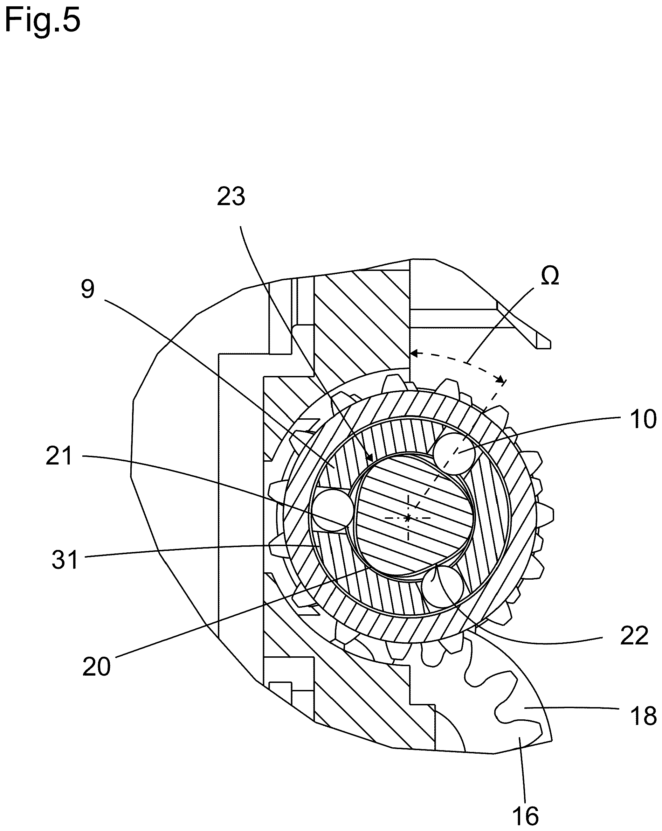

Die Kupplung 6 weist ein Eingangskupplungselement 7 und ein Ausgangskupplungselement 8 auf. Das Eingangskupplungselement 7 ist mit der Antriebswelle 3 verbunden und das Ausgangskupplungselement 8 ist mit der Abtriebswelle 4 verbunden. Darüber hinaus weist die Kupplung 6 einen Mitnehmer 9 auf, an dem drei Klemmkörper 10 geführt sind. Die Klemmkörper 10 sind mittels des Mitnehmers 9 zwischen einer, wie in Figur 4 dargestellten, Koppelstellung und einer, wie in Figur 5 gezeigten, Freilaufstellung schaltbar. In der Koppelstellung ist das Eingangskupplungselement 7 mit dem Ausgangskupplungselement 8 antriebsverbunden, sodass das Drehmoment von der Antriebswelle 3 auf die Abtriebswelle 4 übertragen wird. Das Ausgangskupplungselement 8 ist in der Freilaufstellung von dem Eingangskupplungselement 7 entkoppelt, sodass die Antriebswelle 3 unabhängig von der Abtriebswelle 4 um eine Drehachse D der Antriebswelle 3 dreht.

Der Mitnehmer 9 ist über ein Getriebe 11 mit einer geringeren Drehzahl als das Eingangskupplungselement 7 in derselben Drehrichtung angetrieben. Das Getriebe 11 weist ein reibschlüssig mit der Antriebswelle 3 verbundenes Zahnrad 13 und ein neben der Antriebswelle 3 angeordnetes Übertragungszahnrad 14 mit einer ersten Verzahnung 15 und einer zweiten Verzahnung 16 auf. Das Übertragungszahnrad 14 ist an einem Gehäuse 17 der Antriebsvorrichtung 25 um eine parallel zu der Drehachse D angeordnete Rotationsache R drehbar gelagert. Die beiden Verzahnungen 15, 16 des Übertragungszahnrads 14 sind durch einen Trennabschnitt 18 in Richtung entlang der Rotationsachse R voneinander getrennt. Die erste Verzahnung 15 ist mit dem Zahnrad 13 in Eingriff und die zweite Verzahnung 16 ist mit einer Außenverzahnung 19 des Mitnehmers 9 im Eingriff. Die Antriebswelle 3, die Abtriebswelle 4, das Eingangskupplungselement 7, das Ausgangskupplungselement 8 und/oder das Zahnrad 13 des Getriebes 11 sind koaxial zu der Drehachse D der Antriebswelle 3 angeordnet.

Das Getriebe 11 weist eine Übersetzung von größer als eins auf. Das Zahnrad 13, die Außenverzahnung 19 und die Verzahnungen 15, 16 des Übertragungszahnrads 14 weisen eine Zähnezahl mit einem Wert zwischen 10 und 20 auf. Beispielsweise weisen das Zahnrad 13 und die zweite Verzahnung 16 des Übertragungszahnrads 14 hier jeweils eine Zähnezahl mit einem Wert von 14 auf. Die erste Verzahnung 15 des Übertragungszahnrads 14 und die Außenverzahnung 19 des Mitnehmers 9 weisen hier zum Beispiel eine Zähnezahl mit einem Wert von 15 auf.

Das Eingangskupplungselement 7 ist derart ausgebildet, dass die Klemmkörper 10 bei einer Drehrichtungsumkehr der Antriebswelle 3 zwischen der Koppelstellung und der Freilaufstellung verstellt werden. Die Antriebswelle 3 wird nach der Drehrichtungsumkehr relativ zu dem Mitnehmer 9 mit einem Drehwinkel Ω mit einem Wert zwischen 15 und 30° verdreht, wobei der Mitnehmer 9 und die Antriebswelle in dieselbe Drehrichtung drehen.

Das Eingangskupplungselement ist beispielsweise in Form eines Dreiecksprofils 7 ausgebildet. Das Dreiecksprofil 7 ist ein Längenabschnitt der Antriebswelle 3 mit einem quer zu der Drehachse D angeordneten gleichseitigen, dreieckigen Querschnitt 20.

Das Dreiecksprofil 7 weist drei sich in Richtung entlang der Drehachse D erstreckende Eckrundungen 21 sowie zwischen den Eckrundungen 21 verlaufende Seitenflächen 22 auf. Die Seitenflächen 22 und die Eckrundungen 21 bilden eine Mantelfläche 23 des Dreiecksprofils 7. Die Klemmkörper 10 sind in Umfangsrichtung zu der Drehachse D verteilt an dem Mitnehmer 9 angeordnet. Die Klemmkörper 10 sind jeweils einer Seitenfläche 22 des Dreiecksprofils 7 zugeordnet und entlang der jeweiligen Seitenfläche 22 zwischen der Koppelstellung und der Freilaufstellung verstellbar.

Das Ausgangskupplungselement 8 ist an dem Gehäuse 17 der Antriebsvorrichtung 25 gelagert. Hierzu ist ein Lagerelement in Form eines Wälzlagers 26 vorgesehen. Der Mitnehmer 9 ist zumindest abschnittsweise in einer Aufnahme 24 des Ausgangskupplungselements 8 aufgenommen. Die Aufnahme 24 ist zylinderförmig ausgebildet und definiert einen Innenraum 27 des Ausgangskupplungselements 8.

Der Mitnehmer 9 ist zumindest abschnittsweise in dem Innenraum 27 aufgenommen. Weiter ist der Mitnehmer 9 hülsenförmig ausgebildet und weist einen sich in Richtung entlang der Drehachse D erstreckenden Hohlraum 28 mit zwei Teilabschnitten 29, 30 auf. Ein erster Teilabschnitt 29 zum Lagern des Mitnehmers 9 auf der Antriebswelle 3 weist einen kleineren Durchmesser als ein zweiter Teilabschnitt 30 zum Aufnehmen des Dreiecksprofils 7 auf.

Die Klemmkörper 10 sind jeweils in einem Fenster 31 des Mitnehmers 9 angeordnet und in radialer Richtung zu der Drehachse D der Antriebswelle 3 zwischen der Koppelstellung und der Freilaufstellung verstellbar. In der Koppelstellung sind die Klemmkörper 10 durch das Dreiecksprofil 7 mit einer Innenwand 39 des Innenraums 27 in Anlage und gegen diese gepresst, sodass ein Form- und/oder Kraftschluss zwischen dem Dreiecksprofil 7 und dem Ausgangskupplungselement 8 erzeugt ist.

Zum reibschlüssigen Verbinden des Zahnrades 13 mit der Antriebswelle 3 ist ein Reibelement in Form eines O-Rings 32 vorgesehen. Der O-Ring 32 ist in einer Nut 33 der Antriebswelle 3 angeordnet. Das Zahnrad 13 weist eine axiale Vertiefung 34 mit einer in Umfangsrichtung zu der Drehachse D angeordneten Innenfläche 35 auf. In der Freilaufstellung ist zwischen dem O-Ring 32 und der Innenfläche 35 der Vertiefung 34 des Zahnrads 13 aufgrund der Drehzahldifferenz zwischen der Antriebswelle 3 und der Abtriebswelle 4 ein Reibschluss in Umfangsrichtung zu der Drehachse D ausgebildet. In der Koppelstellung ist der Reibschluss aufgrund der synchronisierten Drehzahl gelöst.

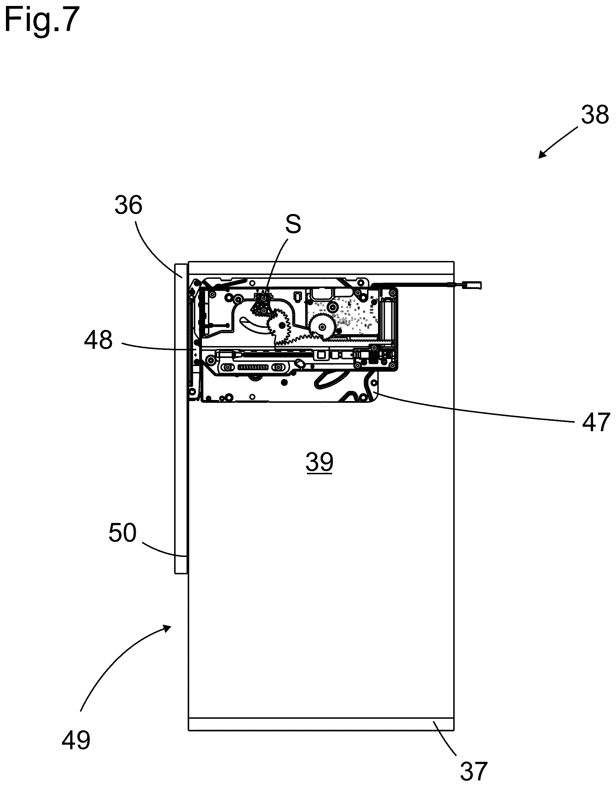

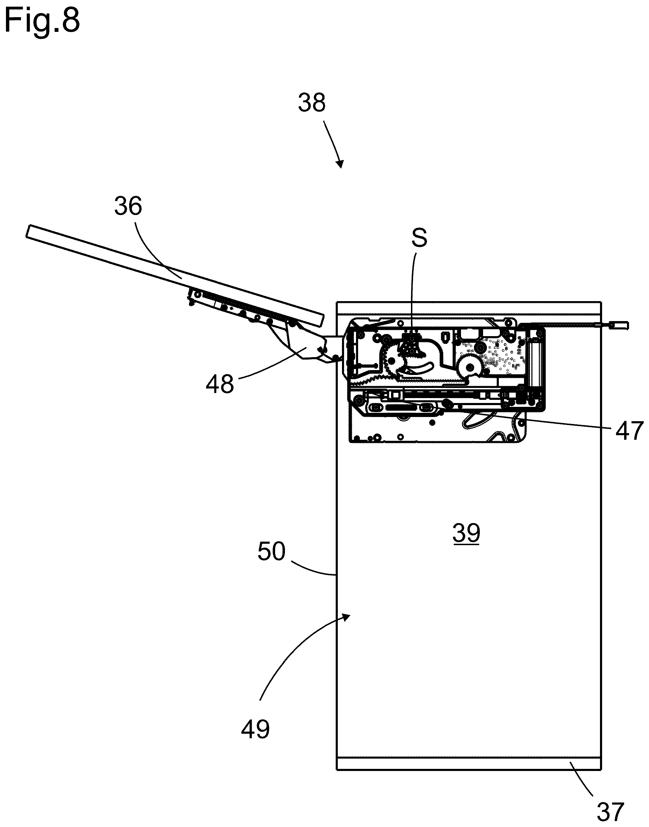

Das Gehäuse 17 der Antriebsvorrichtung 25 zum Bewegen eines bewegbaren Möbelteils 36 ist, wie in Figur 7 und 8 dargestellt, mit einem Korpus 37 eines Möbels 38 verbindbar. Die Verstelleinheit 5 zum zumindest mittelbaren Bewegen eines verzahnten Stellelements 40 ist mit dem Gehäuse 17 verbunden. Die Verstelleinheit 5 weist eine mit der Antriebswelle 3 antriebsverbundene Gewindespindel 41 und eine auf der Gewindespindel 41 verstellbare Spindelmutter 42 auf.

Ferner weist die Antriebsvorrichtung 25 eine erste Zahnstange 43 auf, die mit der Verstelleinheit 5 entlang einer Bewegungsachse B zwischen einer, wie in Figur 7 gezeigten, ersten Endposition und einer, wie in Figur 8 gezeigten, zweiten Endposition bewegbar ist. Weiter weist die Antriebsvorrichtung 25 eine zweite Zahnstange 44 auf, die fest mit dem Gehäuse 17 verbunden ist. Das verzahnte Stellelement 40 steht mit der ersten und zweiten Zahnstange 43, 44 in Eingriff und ist mit dem bewegbaren Möbelteil 36 verbindbar. Um die erste Zahnstange 43 entlang der Bewegungsachse B zu bewegen, ist die Spindelmutter 42 fest mit der ersten Zahnstange 43 verbunden.

Die Antriebsvorrichtung 25 weist eine Steuereinheit 45 zum Steuern der Antriebseinheit 1 auf. Die Steuereinheit 45 ist mit mindestens einem Sensorelement 46 zum Erfassen zumindest einer Endposition der Verstelleinheit 5 und der ersten Zahnstange 43 verbunden. Die Steuereinheit 45 ist derart ausgebildet, dass sie in Abhängigkeit von Sensorsignalen ein vorgebbares Programm, z.B. ein Steuerprogramm ausführt. Das vorgebbare Programm weist Einstellungsmöglichkeiten für den Bewegungsablauf der Antriebseinheit 1 auf.

Das Möbel 38 ist hier beispielsweise ein Oberschrank für die Küche. Das bewegbare Möbelteil 36 ist hier zum Beispiel eine Klappe. Die Antriebsvorrichtung 25 ist über einen Möbelbeschlag 47 mit einem Stellarm 48 verbunden. Der Stellarm 48 ist um eine Stellachse S zwischen der Schließstellung und der Offenstellung verschwenkbar. Die Klappe 36 ist dazu vorgesehen, einen Innenraum 49 des Möbelkorpus 37 in der Schließstellung zu verschließen. In der Offenstellung ist der Stellarm 48 derart angeordnet, dass das bewegbare Möbelteil 36 eine Öffnung 50 des Innenraums 49 freigibt.

Zum Bewegen des Möbelteils 36 mittels der Verstelleinheit 5 und dem verzahnten Stellelement 40 wird die Antriebswelle 3 in eine erste Drehrichtung oder eine zweite Drehrichtung gedreht. Bei in der Koppelstellung angeordneten Klemmkörpern 10 wird das Drehmoment der Antriebswelle 3 auf die Abtriebswelle 4 übertragen, wodurch die Verstelleinheit 5 in Abhängigkeit von der Drehrichtung derart bewegt wird, dass das bewegbare Möbelteil 36 in Richtung einer, wie in Figur 7 gezeigten Schließstellung oder einer, wie in Figur 8 dargestellten, Offenstellung verstellt wird.

Die Klemmkörper 10 werden in Abhängigkeit von dem erfassten Signal des Sensorelements 46 durch die Steuereinheit 45 bei Erreichen der Schließstellung oder der Offenstellung des Möbelteils 36, d.h. bei Erreichen der ersten oder zweiten Endposition der Verstelleinheit 5 und der ersten Zahnstange 43, von der Koppelstellung in die Freilaufstellung geschaltet. Das Schalten, beziehungsweise Verstellen der Klemmkörper 10 wird durch eine Drehrichtungsumkehr der Antriebswelle 3, beziehungsweise des Elektromotors 2 bewirkt. Nach der Drehrichtungsumkehr ist die Antriebswelle 3 reibschlüssig mit dem Zahnrad 13 des Getriebes 11 verbunden, sodass das Übertragungszahnrad 14 durch die Antriebswelle 3 angetrieben ist und das Drehmoment von der Antriebswelle 3 auf den Mitnehmer 9 mit einer Übersetzung von größer als eins überträgt. Durch das Getriebe 11 wird der Mitnehmer 9 langsamer als das Dreiecksprofil 7 gedreht, sodass der Mitnehmer 9 um den Drehwinkel Ω relativ zu dem Dreiecksprofil 7 verstellt wird und die Klemmkörper 10 von der Koppelstellung in die Freilaufstellung schaltet.

Dadurch, dass der Mitnehmer 9 durch das Getriebe 11 von dem Elektromotor 2 mit einer geringeren Drehzahl als das Dreiecksprofil 7 angetrieben ist, kann der Mitnehmer 9 präzise gegenüber dem Dreiecksprofil 7 ausgerichtet werden, um die Klemmkörper 10 störungssicher zwischen der Kopplungsstellung und der Freilaufstellung zu schalten.

### Bezugszeichenliste

- 1: Antriebseinheit
- 2: Elektromotor
- 3: Antriebswelle
- 4: Abtriebswelle
- 5: Verstelleinheit
- 6: Kupplung
- 7: Eingangskupplungselement (Dreiecksprofil)
- 8: Ausgangskupplungselement
- 9: Mitnehmer
- 10: Klemmkörper
- 11: Getriebe
- 13: Zahnrad
- 14: Übertragungszahnrad
- 15: erste Verzahnung
- 16: zweite Verzahnung
- 17: Gehäuse
- 18: Trennabschnitt
- 19: Außenverzahnung des Mitnehmers
- 20: Querschnitt des Dreiecksprofils
- 21: Eckrundung
- 22: Seitenfläche
- 23: Mantelfläche
- 24: Aufnahme
- 25: Antriebsvorrichtung
- 26: Lagerelement (Wälzlager)
- 27: Innenraum
- 28: Hohlraum
- 29: erster Teilabschnitt
- 30: zweiter Teilabschnitt
- 31: Fenster
- 32: Reibelement (O-Ring)
- 33: Nut
- 34: Vertiefung
- 35: Innenfläche
- 36: Möbelteil
- 37: Korpus
- 38: Möbel
- 39: Innenwand
- 40: verzahntes Stellelement
- 41: Gewindespindel
- 42: Spindelmutter
- 43: erste Zahnstange
- 44: zweite Zahnstange
- 45: Steuereinheit
- 46: Sensorelement
- 47: Möbelbeschlag
- 48: Stellarm
- 49: Innenraum des Möbels
- 50: Öffnung des Möbels
- Ω: Drehwinkel
- B: Bewegungsachse
- D: Drehachse
- R: Rotationsachse
- S: Stellachse

## Patentansprüche

1. Antriebseinheit für eine Antriebsvorrichtung zum Bewegen eines bewegbaren Möbelteils, umfassend:
- eine von einem Elektromotor (2) angetriebene Antriebswelle (3),
- eine Abtriebswelle (4) zum Bewegen einer Verstelleinheit (5) der Antriebsvorrichtung (25),
- eine Kupplung (6), über die die Antriebswelle (3) mit der Abtriebswelle (4) antriebsverbindbar ist,
- mit einem Eingangskupplungselement (7), das mit der Antriebswelle (3) verbunden ist,
- mit einem Ausgangskupplungselement (8), das mit der Abtriebswelle (4) verbunden ist, und
- mit einem Mitnehmer (9), an dem zumindest ein Klemmkörper (10) geführt ist,
- wobei der zumindest eine Klemmkörper (10) mittels des Mitnehmers (9) zwischen zumindest einer das Eingangskupplungselement (7) und das Ausgangskupplungselement (8) antriebsverbindenden Koppelstellung und einer das Eingangskupplungselement (7) und das Ausgangskupplungselement (8) entkoppelnden Freilaufstellung schaltbar ist,
**gekennzeichnet durch**
ein Getriebe (11), über das der Mitnehmer (9) mit einer geringeren Drehzahl als das Eingangskupplungselement (7) in derselben Drehrichtung angetrieben ist.

2. Antriebseinheit nach Anspruch 1,
**dadurch gekennzeichnet,**
**dass** der Mitnehmer (9) über das Getriebe (11) mittels der Antriebswelle (3) antreibbar ist, wobei das Getriebe (11) derart ausgebildet ist, dass eine Übersetzung zwischen der Antriebswelle (3) und dem Mitnehmer (9) von größer als eins vorliegt.

3. Antriebseinheit nach Anspruch 1 oder 2,
**dadurch gekennzeichnet,**
**dass** das Getriebe (11) ein mit der Antriebswelle (3) verbundenes Zahnrad (13) und ein Übertragungszahnrad (14) zum Übertragen des Drehmoments von der Antriebswelle (3) auf den Mitnehmer (9) aufweist.

4. Antriebseinheit nach Anspruch 3,
**dadurch gekennzeichnet,**
**dass** das Übertragungszahnrad (14) eine mit dem Zahnrad (13) in Eingriff befindliche erste Verzahnung (15) und eine mit einer Außenverzahnung (19) des Mitnehmers (9) in Eingriff befindliche zweite Verzahnung (16) aufweist, wobei das Zahnrad (13) und die zweite Verzahnung (16) eine Zähnezahl mit einem Wert zwischen 10 und 20 aufweisen.

5. Antriebseinheit nach einem der Ansprüche 1 bis 4,
**dadurch gekennzeichnet,**
**dass** das Eingangskupplungselement (7) derart ausgebildet ist, dass der Klemmkörper (10) bei einer Drehrichtungsumkehr der Antriebswelle (3) zwischen der Koppelstellung und der Freilaufstellung verstellt wird.

6. Antriebseinheit nach Anspruch 5,
**dadurch gekennzeichnet,**
**dass** das Eingangskupplungselement (7) derart ausgebildet ist, dass die Antriebswelle (3) relativ zu dem Mitnehmer (9) zum Verstellen des Klemmkörpers (10) von der Koppelstellung in die Freilaufstellung bei der Drehrichtungsumkehr der Antriebswelle (3) mit einem Drehwinkel (Ω) mit einem Wert zwischen 15° und 30° in die entgegengesetzte Drehrichtung gedreht wird.

7. Antriebseinheit nach einem der Ansprüche 1 bis 6,
**dadurch gekennzeichnet,**
**dass** das Eingangskupplungselement im Wesentlichen als Dreiecksprofil (7) ausgebildet ist und die Kupplung (6) drei in Umfangsrichtung zu der Drehachse (D) verteilt angeordnete Klemmkörper (10) aufweist.

8. Antriebseinheit für einen Möbelbeschlag nach einem der Ansprüche 1 bis 7,
**dadurch gekennzeichnet,**
**dass** das Ausgangskupplungselement (8) eine Aufnahme (24) zum zumindest teilweisen Aufnehmen des Mitnehmers (9) aufweist, wobei der Klemmkörper (10) in der Koppelstellung mit einer Innenwand (39) der Aufnahme (24) in Anlage ist.

9. Antriebseinheit für einen Möbelbeschlag nach Anspruch 8,
**dadurch gekennzeichnet,**
**dass** der Klemmkörper (10) in der Koppelstellung zwischen der Innenwand (39) der Aufnahme (24) und einer Außenfläche (23) der Antriebswelle (3) klemmt.

10. Antriebseinheit für einen Möbelbeschlag nach einem der Ansprüche 1 bis 9,
**dadurch gekennzeichnet,**
**dass** das Zahnrad (13) des Getriebes (11) reibschlüssig mit der Antriebswelle (3) verbunden ist.

11. Antriebseinheit für einen Möbelbeschlag nach einem der Ansprüche 1 bis 10, **dadurch gekennzeichnet,**
**dass** die Antriebswelle (3), die Abtriebswelle (4), das Eingangskupplungselement (8), das Ausgangskupplungselement (9) und/oder das Zahnrad (13) des Getriebes (11) koaxial zu einer Drehachse (D) der Antriebswelle (3) angeordnet sind.

12. Antriebseinheit für einen Möbelbeschlag nach einem der Ansprüche 1 bis 11, **dadurch gekennzeichnet,**
**dass** der Klemmkörper (10) in einem Fenster (31) des Mitnehmers (9) sitzt.

13. Antriebsvorrichtung zum Bewegen eines bewegbaren Möbelteils, mit
- einem mit einem Korpus (37) des Möbels (38) verbindbaren Gehäuse (17),
- einer mit dem Gehäuse (17) verbundenen Verstelleinheit (5) zum zumindest mittelbaren Bewegen eines verzahnten Stellelements (40) und
- einer Antriebseinheit (1) nach einem der Ansprüche 1 bis 12, mit einer mit der Verstelleinheit (5) verbundenen Abtriebswelle (4).

14. Antriebsvorrichtung nach Anspruch 13,
**gekennzeichnet durch** eine Steuereinheit (45) zum Steuern der Antriebseinheit (1), wobei die Steuereinheit (45) mit mindestens einem Sensorelement (46) zum Erfassen zumindest einer Endposition der Verstelleinheit (5) verbunden ist.

15. Möbel mit
- einem Korpus (37),
- einem relativ zu dem Korpus (37) bewegbaren Möbelteil (36),
- einem Stellarm (48) und
- einer Antriebsvorrichtung (25) nach Anspruch 12 oder 13, wobei
- das Gehäuse (17) mit dem Korpus (37) verbunden ist; und
- das verzahnte Stellelement (40) über den Stellarm (48) mit dem bewegbaren Möbelteil (36) verbunden ist.
